# EUROPEAN PATENT SPECIFICATION

(11) **EP 1 450 723 B1**
(45) Date of publication and mention of the grant of the patent: **21.06.2006**
(21) Application number: 01274760.6
(22) Date of filing: 05.11.2001
(51) Int. Cl.: A61C 9/00

(54) **DEVICE FOR MAKING DENTAL PRINTS**
VORRICHTUNG ZUR HERSTELLUNG VON ZAHNABDRÜCKEN
DISPOSITIF POUR PRENDRE DES EMPREINTES DENTAIRES

(43) Date of publication of application: 01.09.2004
(73) Proprietor: Corradi, Guiseppe, 90144 Palermo (IT)
(72) Inventor: Corradi, Guiseppe, 90144 Palermo (IT)
(74) Representative: Gervasi, Gemma
(86) International application number: PCT/IT2001/000556
(87) International publication number: WO 2003/043522

(56) References cited:
- WO-A-01/37755
- DE-B- 1 079 276
- DE-C- 837 437
- US-A- 5 076 785
- US-B1- 6 302 690

## Description

The present invention relates to a disposable device for making dental prints, of a type apt to contain and to support a print of a patient's dental arch.

In the art, devices for making dental prints of a top or bottom dental arch are already known. Typically, such devices are shaped as a shell for the housing of a dental arch therein. The dental print is obtained by placing a suitable preparation, which is a material, to be placed into the patient's mouth, initially fluid and pasty, onto the shell-typed device for making dental prints, and then exerting a pressure onto the preparation in the dental arch so as to set the pasty compound and make a print of the dental arch.

A known first type of such devices for making dental prints, entirely made in surgical metal, is particularly preferred, providing a high reliability given the intrinsic sturdiness thereof. Also, by virtue of the stiffness of the metallic material, a very accurate dental print, free from dislocations or deformations during the setting of the printable material, is provided.

However, these types of metallic devices entail the huge drawback of requiring an extremely thorough post-employ cleaning and sterilization, so as to ensure a sanitation for a subsequent employ thereof, thereby avoiding the risk of transmitting extremely serious illnesses to the patient's oral cavity. More precisely, such devices have a plurality of holes on their surfaces which are apt to let the pasty material flow during the making of the print. These holes are filled up with material which, upon hardening, is hardly detachable by a user. Moreover, this cleaning and sterilizing step is very long, presents some difficulty and is expensive in terms of running costs.

On the other hand, the art is aware of another type of device for making dental prints, which is a disposable type and entirely plastic-made. Such type of device, being disposable, provides a high degree of hygiene to the patient, yet due to the material employed it entails the drawback of lacking stiffness. Therefore, during the making of the print, the latter is often jeopardized by possible deformations occurred upon applying the pressure exerted onto the plastic support. This results in it being slightly reliable in terms of sturdiness, accurate employ, and exact printing.

Hence, the aim of the present invention is to provide a device for making dental prints which overcomes the abovementioned drawbacks, providing at the same time a high degree of sturdiness and stiffness and utmost hygiene to the patient.

The present invention provides a device for making dental prints comprising a first supporting structure and a second structure for containing material apt to make the dental print,
characterised in that said supporting structure and said structure for containing have locking means for the mutual and removable locking thereof.

Moreover, the present invention provides a method for making dental prints characterised in that it comprises the following steps:
- arranging a structure for containing a fluid product making the dental print on a supporting member in a slidably restrained manner;
- placing the fluid product in said structure for containing assembled on said supporting member;
- making the print of a respective dental arch of a user;
- disconnecting said structure for containing from said supporting member; and
- making a mould of said dental print by means of the sole containing structure which is separated from said supporting member.

A detailed description of a preferred embodiment of the device for making dental prints of the present invention will hereinafter be provided, given by way of example and without limitative purposes, making reference to the annexed drawings, wherein:
Fig. 1 is a perspective view of the device of the present invention in a first condition;
Fig. 2 is an exploded view of the device of Fig. 1;
Fig. 3 is a perspective view of the device of the present invention in a second condition;
Fig. 4 is an exploded view of the device of Fig. 3;
Fig. 5A is an elevational view from one side of the device of the present invention in a disconnected condition;
Fig. 5B is an elevational view from one side of the device of Fig. 5A in a connected condition; and
Fig. 6 is a bottom plan view of the device of Fig. 5B in a connected condition.

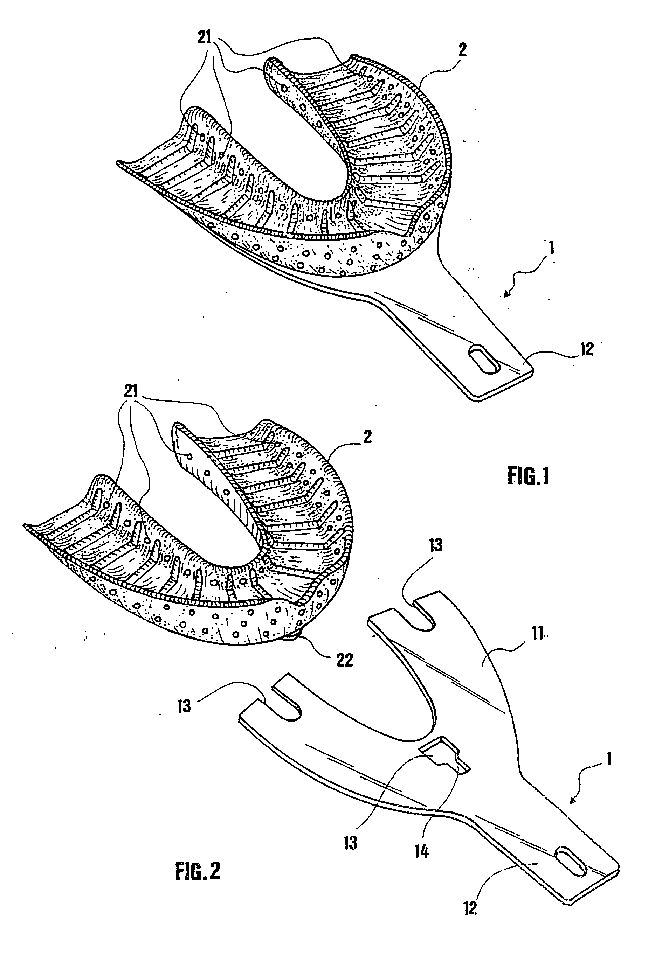

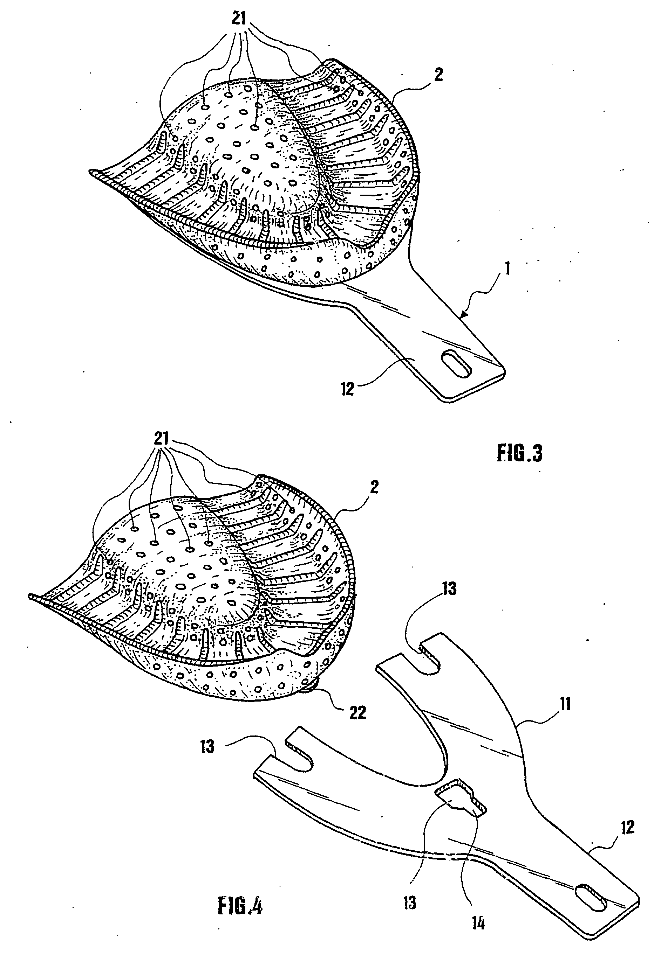

With reference now to Figs. 1 and 2, the device for making dental prints of the present invention is illustrated.

According to the invention, a plane and substantially Y-shaped supporting member 1 having a region 11 in form of dental arch, centrally connected to a projecting end 12 for the handling thereof, is provided. The supporting member 1 is suitably made of metallic material or the like having elevated stiffness.

On the surface of the region 11 three slots 13 are obtained, two of them being obtained at the edge area of the region 11 and opened, whereas the third slot is obtained at the central area of member 1, closed and having a region 14 of a smaller size. The function of the latter will be made apparent hereinafter.

Moreover, a shell structure 2 having a typically functional shape, for the housing of the material suitable to realize the dental arch print, is provided. In fact, as it is apparent from the Figs., the shell 2 has a hollow central region apt to house the patient's tongue during the making of the bottom arch print. The shell is preferably made of a suitable plastic material, disposable and inexpensive.

Furthermore, on shell 2 a plurality of holes and grooves 21, apt to allow the flowing of the pasty material through said plurality of holes 21 during the making of the dental print, is obtained.

Moreover, shell 2 has, on the bottom surface thereof, means 22 for the removable connection to said supporting member 1 (not shown and better illustrated hereinafter).

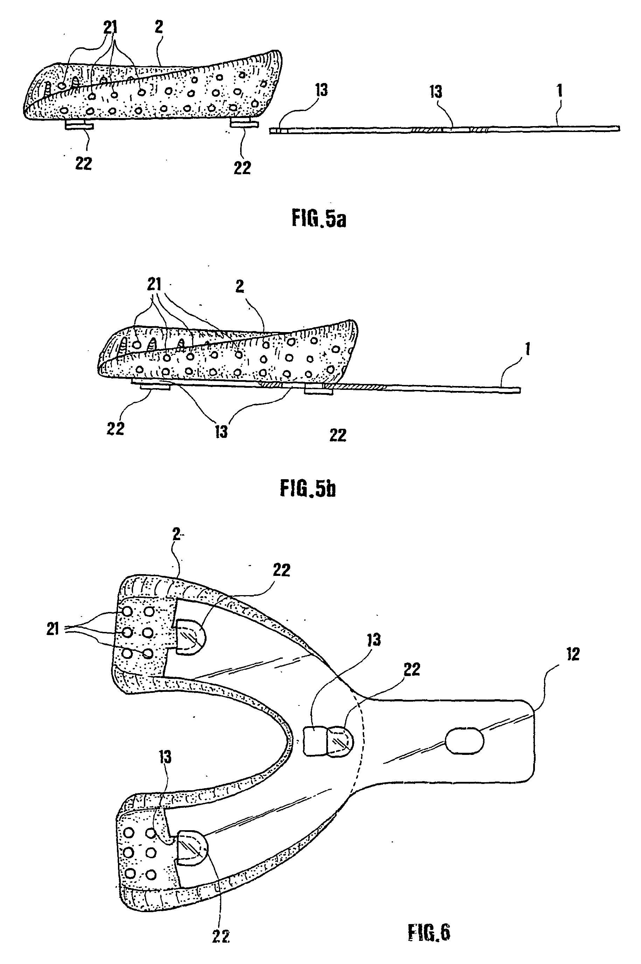

With reference now to Figs. 3 and 4, the device of the present invention in a second condition is illustrated. For clarity's sake, same parts have the same reference numbers and a detailed description thereof is omitted as already provided hereto.

It has to be pointed out that according to the Figs. a shell 2 for making dental prints of the top dental arch of a patient's mouth is illustrated. In fact, according to this type of shell 2, the central region thereof is sturdy and shaped so as to house a patient's palate in the already known manner. Also according to this embodiment, shell 2 has, on the bottom surface thereof, means 22 for the removable connection to said supporting member 1 (not shown and better illustrated hereinafter).

With reference now to Figs. 5A, 5B and 6, the operation of the device of the present invention is herewith illustrated.

As it is apparent from the figures, shell 2 has, on the bottom surface thereof, three projecting members 22, obtained integrally thereto and corresponding to slots 13 of the supporting member 1. The projecting members are shaped so as to exactly fit in the slots 13, and have an undercut end region so as to implement, once inserted in the latter, a slidable restrained connection therein.

The arrangement of members 22 is such that, upon having narrowed shell 2 to the supporting member 1, the former may be slidably inserted until they snap-engage inside the slots 13. In this condition shell 2 is fixedly mounted onto supporting member 1, and a patient's dental print, be it either the top or of the bottom dental arch, may be made. Then shell 2 may easily be disconnected from the supporting member 1 by means of the mutual sliding of the projecting members 22 until the latter disengage from the slots 13, to be sent to the laboratory for the next working step.

The present invention entails several advantages.

A first advantage is provided by the fact that the supporting member 1 provides utmost stiffness of the shell-support assembly, allowing at the same time accuracy and reliability in the making of the dental print.

A second advantage is provided by the fact that the employ of a plane supporting member 1 allows to carry out an easy cleaning and sterilizing thereof subsequently to its employ, unlike the metallic devices of the state of the art.

A third advantage is provided by the fact that the shape of the supporting member 1 is such as to allow the indiscriminate employ thereof, to make dental prints of top arches as well as of bottom arches by the simple replacement of shell 2 while maintaining the same supporting member 1, thereby entailing a remarkable saving of material, time and costs.

A fourth advantage is provided by the fact that the device thus made is suitable for making the two prints of the dental arches starting from a single supporting member 1, so that, upon disconnecting the print-containing structure, the latter may be sent to a laboratory for the subsequent processing steps, whereas the supporting member 1 may be re-employed following a sterilization cycle, thereby entailing a remarkable saving of space, time and costs.

A fifth advantage is provided by the fact that the device of the present invention provides a high degree of accuracy in the making of an exact print, and at the same time a high degree of hygiene, as the supporting member 1 is made of material having an elevated stiffness which provides absence of strain under stress, whereas the shell may be made of disposable and inexpensive material which is suitably sterilized beforehand, during the manufacturing thereof.

## Claims

1. A device for making dental prints comprising a first supporting structure (1) and a second shell structure (2) having a functional shape with a bottom surface and an upper surface for the containing of a material apt to make the dental prints, a plurality of holes and grooves (21), and locking means (13,22) for the mutual and removable locking of said second shell structure (2) onto said first supporting structure (1),
**characterised in that** said locking means comprises at least two slots (13) integral to said first supporting structure (1), and at least two projecting members (22) integrally obtained on the bottom surface of said containing shell structure (2), the arrangement being such that the mutual removable locking is obtained by slidadably snap-engage of said projecting members (22) into said slots (13) of said supporting member (1).

2. The device for making dental prints according to claim 1, wherein said supporting structure is a substantially plane γ-shaped body (1) having an arch-shaped region (11) centrally connected to an elongated projecting region (12).

3. The device for making dental prints according to any one of the preceding claims, wherein said supporting member (1) is made of a material having an elevated stiffness, and anyhow greater than the stiffness of the material of said containing structure (2).

4. The device for making dental prints according to any one of the preceding claims, wherein said containing shell structure (2) is made of plastics material.

## Patentansprüche

1. Vorrichtung zur Herstellung von Zahnabdrücken umfassend eine erste Stützstruktur (1) und eine zweite Hüllstruktur (2) mit einer funktionalen Form mit einer Bodenfläche und einer oberen Fläche zum Aufnehmen eines Materials, das zur Herstellung der Zahnabdrücke geeignet ist, mit einer Vielzahl von Löchern und Nuten (21), und einer Verriegelungsvorrichtung (13, 22) für das gegenseitige und entfernbare Verriegeln der zweiten Hüllstruktur (2) auf der ersten Stützstruktur (1), **dadurch gekennzeichnet, dass** die Verriegelungsvorrichtung mindestens zwei Schlitze (13) umfasst, die ganzheitlich mit der ersten Stützstruktur (1) ausgebildet sind, und mindestens zwei vorstehende Elemente (22) umfasst, die ganzheitlich auf der Bodenfläche der aufnehmenden Hüllstruktur (2) erhalten werden, wobei die Anordnung so ist, dass die gegenseitige entfernbare Verriegelung erhalten wird, indem die vorspringenden Elemente (22) gleitend in die Schlitze (13) des Stützelements (1) einschnappen.

2. Vorrichtung zur Herstellung von Zahnabdrücken nach Anspruch 1, wobei die Stützstruktur ein im Wesentlichen ebener Y-förmiger Körper (1) ist, der einen bogenförmigen Bereich (11) aufweist, der mittig mit einem länglichen vorstehenden Bereich (12) verbunden ist.

3. Vorrichtung zur Herstellung von Zahnabdrücken nach einem der vorangehenden Ansprüche, wobei das Stützelement (1) aus einem Material hergestellt ist, das eine erhöhte Steifigkeit aufweist und in jedem Fall eine größere als die Steifigkeit des Materials der aufnehmenden Struktur (2).

4. Vorrichtung zur Herstellung von Zahnabdrücken nach einem der vorangehenden Ansprüche, wobei die aufnehmende Hüllstruktur (2) aus einem Kunststoffmaterial hergestellt ist.

## Revendications

1. Dispositif destiné à la prise d'empreintes dentaires comprenant une première structure de support (1) et une seconde structure en coque (2) ayant une forme fonctionnelle avec une surface inférieure et une surface supérieure pour la rétention d'un matériau convenant à la prise d'empreintes dentaires, une pluralité de trous et de rainures (21) et un moyen de verrouillage (13, 22) pour le verrouillage mutuel et réversible de ladite seconde structure en coque (2) sur ladite première structure de support (1),
**caractérisé en ce que** ledit moyen de verrouillage comprend au moins deux fentes (13) intégrées à ladite première structure de support (1), et au moins deux éléments en saillie (22) rapportés d'une seule pièce sur la surface inférieure de ladite structure en coque de rétention (2), la disposition étant telle que verrouillage mutuel réversible est obtenu par agrafage en glissant lesdits éléments en saillie (22) à l'intérieur desdites fentes (13) dudit élément de support (1).

2. Dispositif destiné à la prise d'empreintes dentaires selon la revendication 1, dans lequel ladite structure de support est un corps (1) en forme de Y substantiellement plan présentant une région (11) en forme d'arcade reliée en son centre à une région (12) formant une saillie allongée.

3. Dispositif destiné à la prise d'empreintes dentaires selon l'une quelconque des revendications précédentes, dans lequel ledit élément de support (1) est fabriqué en un matériau présentant une rigidité élevée, et en tout cas supérieure à la rigidité du matériau de ladite structure de contenance (2).

4. Dispositif destiné à la prise d'empreintes dentaires selon l'une quelconque des revendications précédentes, dans lequel ladite structure en coque destinée à contenir est fabriquée en un matériau plastique.
